# EUROPÄISCHE PATENTSCHRIFT

(11) **EP 1 156 248 B1**
(45) Veröffentlichungstag und Bekanntmachung des Hinweises auf die Patenterteilung: **03.03.2004**
(21) Anmeldenummer: 01112357.7
(22) Anmeldetag: 21.05.2001
(51) Int. Cl.: F16K 31/40

(54) **Ventilanordnung**
Valve assembly
Agencement de soupape

(30) Priorität: 19.05.2000 DE 10024441
(43) Veröffentlichungstag der Anmeldung: 21.11.2001
(73) Patentinhaber: Hecht GmbH, 88285 Bodnegg (DE); Hecht Automatisierungs-Systeme GmbH, 88285 Bodnegg (DE); V.I.P. Gesellschaft für Verwaltung und Innovatives Planen mbH, 88285 Bodnegg (DE)
(72) Erfinder: Hecht, Hubert, 88214 Ravensburg (DE); Hecht, Johannes, 88281 Unterankenreute (DE); Blum, Hans-Peter, 88213 Ravensburg (DE); Wiedmann, Michael, 88263 Horgenzell (DE)
(74) Vertreter: Roth, Klaus, Dr.

(56) Entgegenhaltungen:
- US-A- 3 957 244
- US-A- 4 961 441
- US-A- 5 687 759
- US-A- 5 887 847
- US-A- 6 056 008
- PATENT ABSTRACTS OF JAPAN vol. 016, no. 273 (C-0953), 18. Juni 1992 (1992-06-18) & JP 04 067876 A (HOAN KOUGIYOU KK), 3. März 1992 (1992-03-03)

## Beschreibung

Die Erfindung betrifft eine Ventilanordnung mit einem Hauptgaskanal, in welchem eine Membraneinrichtung angeordnet ist, mit der der Hauptgaskanal geschlossen und geöffnet werden kann und deren Position über ein Magnetventil steuerbar ist.

Eine solche Ventilanordnung ist aus Dokument US 5 687 759 bekannt.

### Stand der Technik

Ventilanordnungen der einleitend bezeichneten Art sind bereits bekannt geworden. Sie werden regelmäßig als Absperrventile in Gasleitungsnetzen im Bereich von Rein- und Reinstgasen eingesetzt. Solche Gasleitungsnetze können Gase enthalten, die brandfördernd, brennbar, korrosiv und auch toxisch sind. Die Betriebsdrücke im Bereich der Rein- und Reinstgasleitungsnetze liegen üblicherweise zwischen 10 und 12 bar. Die Membraneinrichtung umfasst regelmäßig eine aus Kunststoff bestehende Membran mit hoher Elastizität.

Durch die indirekte Steuerung einer im Hauptgaskanal angeordneten Membran über ein Magnetventil kann die Bauform einer derartigen Ventilanordnung, insbesondere bei höheren Betriebsdrücken von 10 bar und darüber, vergleichsweise klein gehalten werden.

Im stromlosen Zustand sind Ventilanordnungen dieser Art aus Sicherheitsgründen normalerweise geschlossen.

### Aufgabe und Vorteile der Erfindung

Der Erfindung liegt die Aufgabe zu Grunde, den Einsatzbereich einer oben angegebenen Ventilanordnung im Hinblick auf Sicherheitsaspekte zu erweitern.

Diese Aufgabe wird durch eine Ventilanordnung der einleitend bezeichneten Art dadurch gelöst, dass eine Einlass- und Auslassseite des Hauptgaskanals mit einem Bypassgaskanal verbunden ist, der sich über ein Bypassmagnetventil öffnen und schließen lässt, und dass mit Verbindung zur Auslassseite ein Drucksensor zur elektronischen Erfassung des Druckes angeordnet ist, der mittels einer Steuereinheit zur Steuerung des Hauptmagnetventils eingesetzt wird. Durch diese Vorgehensweise wird es möglich, beim Öffnen der Ventilanordnung zunächst nur die Einlass- und Auslassseite mit dem Bypassgaskanal zu verbinden und in Abhängigkeit des Drucksverhaltens der Auslassseite über das Hauptmagnetventil die Membraneinrichtung im Hauptgaskanal zu öffnen.

In einer besonders bevorzugten Ausgestaltung der Erfindung ist die Elektronikeinheit nach einer entsprechenden Betätigung, z.B. durch Drücken eines Starttasters, dazu ausgelegt, zunächst den Bypassgaskanal durch Öffnen des Bypassmagnetventils zu öffnen und nur dann den Hauptgaskanal mittels des Hauptmagnetventils ebenfalls zu öffnen, wenn auf der Auslassseite ein vorgegebener Druck, vorzugsweise innerhalb einer vorgegebenen Zeitspanne, erreicht wird. Auf diese Weise kann sicher gestellt werden, dass bei einem Leck im Gasleitungssystem, das sich an die Auslassseite der Ventilanordnung anschließt, der Hauptgaskanal erst gar nicht geöffnet wird, da sich auf der Auslassseite in diesem Fall kein ausreichender Gasdruck bei entsprechender Leckgröße aufbauen kann. Der Hauptgaskanal wird dementsprechend auch nicht geöffnet, wenn sich beispielsweise im anschließenden Gasleitungssystem in unbeabsichtigter Weise ein offen stehendes Entnahmeventil befindet.

Im Weiteren es besonders bevorzugt, wenn die Elektronikeinheit dazu ausgelegt ist, das Bypassmagnetventil zu schließen, wenn der Hauptgaskanal mittels des Hauptmagnetventils geöffnet ist. Durch diese Maßnahme kann der Hauptgaskanal durch einfaches Schließen des Hauptmagnetventils geschlossen werden, wobei die Ventilanordnung dann im Ausgangszustand ist, der dem stromlosen Zustand entspricht.

In einer weiteren vorteilhaften Ausgestaltung der Erfindung ist die Elektronikeinheit dazu ausgelegt, den "Belüftungsvorgang" der Auslassseite, d. h. einen Gasdruckausgleich mit der Auslassseite, durch den Bypassgaskanal abzubrechen, wenn am Auslass ein bestimmter Druckwert nach einer vorgegebenen Zeitspanne nicht erreicht wird. Durch diese Maßnahme wird sicher gestellt, dass bei einem Leck im auf der Ausgangsseite der Ventilanordnung anschließenden Gassystem nicht über einen unnötig langen Zeitraum versucht wird, auf der Auslassseite einen Gasdruck über einen geöffneten Bypassgaskanal aufzubauen. Damit wird die Gasmenge, die das Gassystem durch das Leck verlässt, möglichst klein gehalten, wodurch insbesondere die Sicherheit für Personen in der Umgebung des Lecks erhöht wird. Um diesbezüglich die Sicherheit weiter zu verbessern, wird vorgeschlagen, dass die Elektronikeinheit die Ventilanordnung für eine vorbestimmte Zeit sperrt, sofern in einer vorgegebenen Zeit mehrere erfolglose Versuche unternommen worden sind, einen Druckaufbau über das Bypassgasventil auf der Auslassseite der Ventilanordnung herbeizuführen.

Vorzugsweise ist der Drucksensor zur kontinuierlichen Messung des Druckes in einem vorgegebenen Messbereich ausgelegt. Auf diese Weise wird es insbesondere bei entsprechend ausgebildeter Elektronikeinheit möglich, den Gasdruck im Leitungsnetzabschnitt nach der Ventilanordnung auch kontinuierlich zu erfassen. Dies hat den Vorteil, dass der Gasdruck überwacht werden kann, wenn z. B. über eine Zentralsteuerung die Gasanlage bestimmungsgemäß außer Betrieb genommen worden ist (beispielsweise nach Arbeitsende oder am Wochenende). Damit lassen sich Leckagen sofort erkennen, was eine schnelle Beseitigung der Ursachen ermöglicht.

Um eine Drucküberwachung mittels des Drucksensors unabhängig vom Zustand der Ventilanordnung bei einfacher konstruktiver Auslegung der Ventilanordnung vornehmen zu können, wird überdies vorgeschlagen, dass der Drucksensor an einem Abschnitt des Bypassgaskanals angeordnet ist, der ständig mit dem Auslass in Verbindung steht.

In einer weiteren bevorzugten Ausgestaltung ist die Elektronikeinheit dazu in der Lage, das Hauptmagnetventil automatisch zu schließen, wenn der Druck auf der Auslassseite einen bestimmten Wert über- oder unterschreitet. Hierdurch wird ein unnötiger Gasaustritt aus dem Gasleitungssystem bei einem plötzlich auftretenden Leck vermieden. Wird ein Druckabfall bzw. eine Leckage durch beispielsweise die zentralsteuerung erkannt, erfolgt über die Steuerung eine Meldung an den Benutzer. Vor einer erneuten Inbetriebnahme der Anlage muss dieser diese Meldung manuell quittieren. Ansonsten bleibt die Anlage blockiert. Hierdurch wird eine weitere Sicherheitsstufe bei der Bedienung eines Gassystems erzeugt, was Unfälle vermeiden hilft.

### Zeichnungen

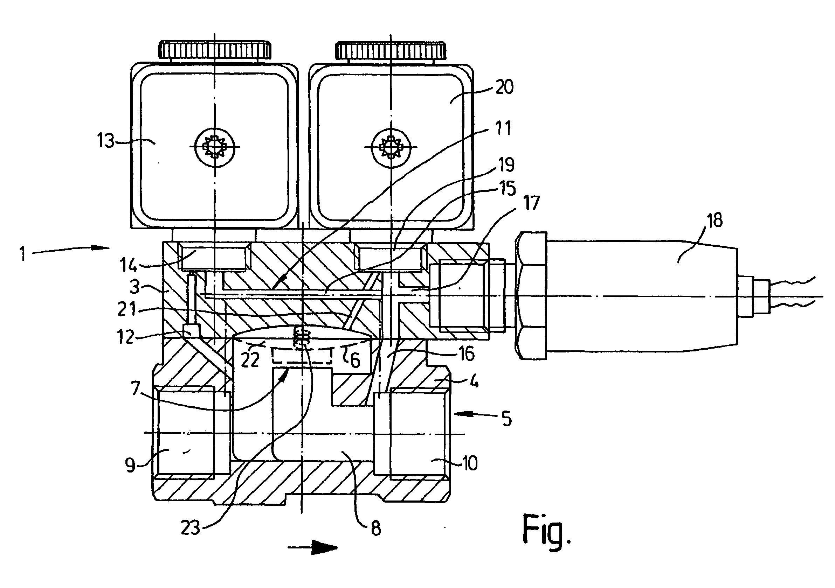

Ein Ausführungsbeispiel der Erfindung ist in der einzigen Figur dargestellt und wird unter Angabe weiterer Vorteile und Einzelheiten näher erläutert.

### Beschreibung des Ausführungsbeispiels

Die Figur zeigt eine Ventilanordnung 1 in einem schematischen Schnittbild, die ein zweiteiliges Ventilgehäuse 2 umfasst, das einen oberen Gehäusekörper 3 und einen unteren Gehäusekörper 4 besitzt.

Im unteren Gehäusekörper 4 ist ein Hauptgaskanal 5 ausgebildet, in welchem eine Membran 6 (gestrichelt eingezeichnet) zwischen den beiden Gehäusekörpern 3 und 4 fixiert ist. Über die Membran 6, an welcher gegebenenfalls ein Ventilsitz 24 (gestrichelt dargestellt) ausgebildet ist, lässt sich eine in der Figur horizontal angeordnete Öffnung 7 eines pfeifenförmig aussehenden Abschnitts 8 verschließen, wodurch der Hauptgaskanal 5 gesperrt ist. Die Membran 6 wird über eine gestrichelt eingezeichnete Feder 23 gegen die Öffnung 7 gedrückt. Die Feder 23 ist auf die Dimensionierung und den Arbeitsdruck der Ventilanordnung 1 entsprechend abgestimmt.

Der Einlass 9 des Hauptgaskanals 5 ist über einem Bypassgaskanal 11 mit dem Auslass 10 des Hauptgaskanals 5 verbindbar. Der Bypassgaskanal 11 besitzt einen ersten Kanalabschnitt 12, der im Bereich des Einlasses 9 ansetzt und in einer Ventilkammer 14 eines Bypassmagnetventils 13 endet. Die Ventilkammer 14 ist über weitere Kanalabschnitte 15, 16 unmittelbar mit dem Auslassbereich 10 des Hauptgaskanals 5 verbunden. Bei stromlosem Bypassmagnetventil 13 blockiert ein in der Ventilkammer 14 befindlicher Ventilstößel die Verbindung zwischen Gaskanalabschnitt 12 und Gaskanalabschnitt 15 bzw. 16, wodurch der Bypassgaskanal 11 gesperrt ist. Vom Kanalabschnitt 16 zweigt ein Kanalabschnitt 17 ab, an dessen Ende ein Analogdruckaufnehmer 18 sitzt. Das heißt, der Analogdruckaufnehmer 18 ist über die offenen Kanalabschnitte 16 und 17 ständig mit dem Auslassbereich 10 des Hauptgaskanals 5 verbunden. Am Ende des Kanalsabschnitts 16 ist eine weitere Ventilkammer 19 eines Hauptmagnetventils 20 angeordnet, von welcher ein Gaskanal 21 abzweigt und in einem Bereich 22 des Hauptgaskanals 5 endet, der durch die Membran 6 vom übrigen Hauptgaskanal hermetisch getrennt ist. Das heißt, zur Verbindung des Bereichs 22 mit dem Auslass 10 wird in eleganter Weise ein bereits vorhandener Bypasskanalabschnitt 16 genutzt.

Die Ventilanordnung 1 kann wie folgt betrieben werden:

Im stromlosen Zustand ist das Bypassmagnetventil 13 und das Hauptmagnetventil 20 geschlossen, wodurch die Membran 6 den Ausgang 7 des pfeifenförmigen Abschnitts 8 verschließt, was einen gesperrten Hauptgaskanal 5 zur Folge hat. Über beispielsweise einen Startknopf kann eine nicht weiter dargestellte Elektronikeinheit das Bypassventil 13 für eine vorgegebene Zeitspanne öffnen. Ist das an den Auslass 10 anschließende Gassystem dicht, wird das über den Einlass und dem Bypasskanal 11 auf die Auflassseite strömende Gas einen Druckanstieg herbeiführen, bis der Analogdruckaufnehmer 18 auf der Auslassseite einen vorgegebenen Druckwert detektiert. Hierdurch wird die nicht näher gezeigte Elektronikeinheit das Hauptmagnetventil 20 öffnen, wodurch der Bereich 22 hinter der Membran 6 über den Gaskanal 21 und den Kanalabschnitt 17 mit dem Auslassbereich des Hauptgaskanals 5 verbunden wird. Dadurch kann Gas aus dem Bereich 22 abströmen, wenn sich die Membran durch den Eingangsgasdruck nach oben bewegen möchte. Bei entsprechenden Druckverhältnissen wird sich daher die Membran 6 anheben, wodurch Gas durch den Hauptgaskanal strömen kann.

Nachdem das Hauptmagnetventil 20 geöffnet hat, wodurch sich die Membran 6 anhebt und den Hauptgaskanal 5 freigibt, wird das Bypassmagnetventil 13 geschlossen.

Um den Hauptgaskanal 5 zu sperren, wird das Hauptmagnetventil 20 geschlossen, wodurch sich die Membran 6 auf die Öffnung 7 absenkt und diese und damit den Hauptgaskanal 5 verschließt.

Das Schließen des Hauptmagnetventils 20 kann nun über die Elektronikeinheit 20 herbeigeführt werden, wenn z. B. ein entsprechender Austaster von einer Bedienperson betätigt wurde oder wenn der Analogdruckaufnehmer 18 einen Druckwert detektiert hat, der unterhalb eines bestimmten Grenzwertes liegt, was beispielsweise eintreten kann, wenn ein Leck im Gassystem nach dem Auslass 10 der Ventilanordnung 1 auftritt.

Die Ventilanordnung 1 ist somit in der Lage, die Sicherheitsbedingungen in einem Gassystem erheblich zu verbessern.

Über den ständig mit einem am Auslass 10 angeschlossenen Gasleitungssystem in Verbindung stehenden Analogdruckaufnehmer 18 kann zudem der Druck im Gassystem ständig überwacht und zur Steuerung der Ventilanordnung 1 eingesetzt werden.

### Bezugszeichenliste:

- 1: Ventilanordnung
- 2: Ventilgehäuse
- 3: Gehäusekörper
- 4: Gehäusekörper
- 5: Hauptgaskanal
- 6: Membran
- 7: Öffnung
- 8: pfeifenförmiger Abschnitt
- 9: Einlass
- 10: Auslass
- 11: Bypassgaskanal
- 12: Kanalabschnitt
- 13: Bypassmagnetventil
- 14: Ventilkammer
- 15: Kanalabschnitt
- 16: Kanalabschnitt
- 17: Kanalabschnitt
- 18: Analogdruckaufnehmer
- 19: Ventilkammer
- 20: Hauptmagnetventil
- 21: Gaskanal
- 22: Hauptgaskanalbereich
- 23: Feder
- 24: Ventilsitz

## Patentansprüche

1. Ventilanordnung mit einem Hauptgaskanal (5), in welchem eine Membraneinrichtung (6) angeordnet ist, mit der der Hauptgaskanal (5) geschlossen und geöffnet werden kann und deren Position über ein Hauptmagnetventil (20) steuerbar ist, **dadurch gekennzeichnet, dass** ein Einlass (9) und ein Auslass (10) des Hauptgaskanals mit einem Bypassgaskanal (11) verbunden sind, der sich über ein Bypassmagnetventil öffnen und schließen lässt, und dass mit Verbindung zur Auslassseite (10) ein Drucksensor (18) zur elektronischen Erfassung des Druckes auf der Auslassseite angeordnet ist, der mittels einer Elektronikeinheit zur Steuerung des Hauptmagnetventils (20) eingesetzt wird.

2. Ventilanordnung nach Anspruch 1, **dadurch gekennzeichnet, dass** die Elektronikeinheit dazu ausgelegt ist, zunächst den Bypassgaskanal (11) über das Bypassmagnetventil (13) zu öffnen und nur dann den Hauptgaskanal (5) mittels des Hauptmagnetventils (20) ebenfalls zu öffnen, wenn auf der Auslassseite ein vorgegebener Druck erreicht ist.

3. Ventilanordnung nach einem der vorgehenden Ansprüche, **dadurch gekennzeichnet, dass** die Elektronikeinheit dazu ausgelegt ist, das Bypassmagnetventil (13) zu schließen, wenn das Hauptmagnetventil (20) geöffnet ist.

4. Ventilanordnung nach einem der vorgehenden Ansprüche, **dadurch gekennzeichnet, dass** die Elektronikeinheit einen "Belüftungsvorgang" der Auslassseite durch den Bypassgaskanal (11) abbricht, wenn am Auslass (10) ein bestimmter Druckwert nach einer vorgegebenen Zeitspanne nicht erreicht wird.

5. Ventilanordnung nach einem der vorgehenden Ansprüche, **dadurch gekennzeichnet, dass** der Drucksensor (18) für eine kontinuierliche Druckmessung ausgelegt ist.

6. Ventilanordnung nach einem der vorhergehenden Ansprüche, **dadurch gekennzeichnet, dass** die Elektronikeinheit zur kontinuierlichen Erfassung von Sensorsignalen des Drucksensors (18) ausgebildet ist.

7. Ventilanordnung nach einem der vorgehenden Ansprüche, **dadurch gekennzeichnet, dass** der Drucksensor (18) an einem Abschnitt (16) des Bypassgaskanals angeordnet ist, der ständig mit dem Auslass (10) in Verbindung steht.

8. Ventilanordnung nach einem der vorgehenden Ansprüche, **dadurch gekennzeichnet, dass** die Elektronikeinheit dazu ausgelegt ist, das Hauptmagnetventil (20) automatisch zu schließen, wenn der Druck auf der Auslassseite (10) einen bestimmten Wert unter- oder überschreitet.

## Claims

1. Valve arrangement comprising a main gas duct (5) in which a membrane device (6) is arranged, with which the main gas duct (5) can be closed and opened and the position of which can be controlled via a main solenoid valve (20), **characterised in that** an inlet (9) and an outlet (10) of the main gas duct are connected to a bypass gas duct (11) which may be opened and closed via a bypass solenoid valve, and **in that** a pressure sensor (18) for electronically detecting the pressure at the outlet side is arranged connected to the outlet side (10), the pressure being used to control the main solenoid valve (20) by means of an electronic unit.

2. Valve arrangement according to claim 1, **characterised in that** the electronic unit is designed to firstly open the bypass gas duct (11) via the bypass solenoid valve (13) and to also open the main gas duct (5) by means of the main solenoid valve (20) when a predetermined pressure has been reached at the outlet side.

3. Valve arrangement according to any of the preceding claims, **characterised in that** the electronic unit is designed to close the bypass solenoid valve (13) when the main solenoid valve (20) is open.

4. Valve arrangement according to any of the preceding claims, **characterised in that** the electronic unit aborts a "ventilation process" of the outlet side via the bypass gas duct (11) if a certain pressure value has not been reached at the outlet (10) after a predetermined period of time.

5. Valve arrangement according to any of the preceding claims, **characterised in that** the pressure sensor (18) is designed for continuous pressure measurement.

6. Valve arrangement according to any of the preceding claims, **characterised in that** the electronic unit is designed to continuously detect sensor signals of the pressure sensor (18).

7. Valve arrangement according to any of the preceding claims, **characterised in that** the pressure sensor (18) is arranged on a portion (16) of the bypass duct which is constantly connected to the outlet (10).

8. Valve arrangement according to any of the preceding claims, **characterised in that** the electronic unit is designed to automatically close the main solenoid valve (20) when the pressure at the outlet side (10) falls below or exceeds a certain value.

## Revendications

1. Agencement de soupape comportant un canal de gaz principal (5), dans lequel est agencé un dispositif à membrane (6) avec lequel le canal de gaz principal (5) peut être fermé et ouvert et dont la position peut être commandée par l'intermédiaire d'une électrovanne principale (20),
**caractérisé en ce qu'**une admission (9) et une sortie (10) du canal de gaz principal sont reliées à un canal de gaz de dérivation (11) qui peut être ouvert et fermé par l'intermédiaire d'une électrovanne de dérivation, et **en ce qu'**un capteur de pression (18) est agencé en relation avec le côté sortie (10) pour la détection électronique de la pression régnant du côté sortie, lequel est utilisé au moyen d'une unité électronique pour la commande de l'électrovanne principale (20).

2. Agencement de soupape selon la revendication 1,
**caractérisé en ce que** l'unité électronique est conçue pour, dans un premier temps, ouvrir le canal de gaz de dérivation (11) par l'intermédiaire de l'électrovanne de dérivation (13) et, seulement ensuite, ouvrir également le canal de gaz principal (5) au moyen de l'électrovanne principale (20), quand une pression prédéterminée est atteinte du côté sortie.

3. Agencement de soupape selon l'une des revendications précédentes,
**caractérisé en ce que** l'unité électronique est conçue pour fermer l'électrovanne de dérivation (13) quand l'électrovanne principale (20) est ouverte.

4. Agencement de soupape selon l'une des revendications précédentes,
**caractérisé en ce que** l'unité électronique interrompt une "opération de ventilation" du côté sortie par le canal de gaz de dérivation (11), quand une certaine valeur de pression n'est pas atteinte à la sortie (10) après un laps de temps prédéterminé.

5. Agencement de soupape selon l'une des revendications précédentes,
**caractérisé en ce que** le capteur de pression (18) est conçu pour une mesure de pression continue.

6. Agencement de soupape selon l'une des revendications précédentes,
**caractérisé en ce que** l'unité électronique est réalisée pour détecter en continu des signaux du capteur de pression (18).

7. Agencement de soupape selon l'une des revendications précédentes,
**caractérisé en ce que** le capteur de pression (18) est agencé sur une section (16) du canal de gaz de dérivation, laquelle communique en permanence avec la sortie (10).

8. Agencement de soupape selon l'une des revendications précédentes,
**caractérisé en ce que** l'unité électronique est conçue pour fermer automatiquement l'électrovanne principale (20) quand la pression régnant du côté sortie (10) est inférieure ou supérieure à une certaine valeur.
